(19) Europäisches Patentamt
European Patent Office
Office européen des brevets

(11) Veröffentlichungsnummer: **0 024 257**
**B1**

(12) # EUROPÄISCHE PATENTSCHRIFT

(45) Veröffentlichungstag der Patentschrift: **14.12.83**

(51) Int. Cl.³: **C 07 C 145/04**, A 01 N 47/24

(21) Anmeldenummer: **80810245.3**

(22) Anmeldetag: **07.08.80**

(54) **N-(2-Isobutyronitrilsulfenyl)-N-methyl-oximcarbamate, Verfahren zu ihrer Herstellung und ihre Verwendung in der Schädlingsbekämpfung.**

(30) Priorität: **13.08.79 CH 7402/79**

(43) Veröffentlichungstag der Anmeldung: **25.02.81 Patentblatt 81/8**

(45) Bekanntmachung des Hinweises auf die Patenterteilung: **14.12.83 Patentblatt 83/50**

(84) Benannte Vertragsstaaten: **BE CH DE FR GB IT LI**

(56) Entgegenhaltungen: **US - A - 4 058 549**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Drabek, Jozef, Dr., Benkenstrasse 12, CH-4104 Oberwil (CH)**
Erfinder: **Böger, Manfred, Lindenstrasse 33, D-7858 Weil am Rhein (DE)**

**EP 0 024 257 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

N-(2-Isobutyronitrilsulfenyl)-N-methyl-oximcarbamate, Verfahren zu ihrer Herstellung und ihre Verwendung in der Schädlingsbekämpfung

Die vorliegende Erfindung betrifft neue N-(2-Isobutyronitrilsulfenyl)-N-methyl-oximcarbamate, welche eine Wirkung gegen Schädlinge besitzen, und Verfahren zu ihrer Herstellung sowie Schädlingsbekämpfungsmittel, welche die vorstehend genannten Oximcarbamate als aktive Komponente enthalten, und Verfahren zur Bekämpfung von Schädlingen unter Verwendung der neuen Verbindungen.

Die erfindungsgemässen N-(2-Isobutyronitrilsulfenyl)-N-methyl-oximcarbamate entsprechen der Formel I

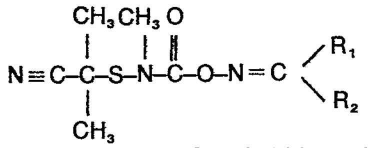
(I),

worin (i) $R_1$ eine $C_1$-$C_3$-Alkylthio- oder Allylthiogruppe und $R_2$ eine Methylgruppe oder (ii) $R_1$ eine Methylthiogruppe und $R_2$ eine Aminocarbonyl-, Methylaminocarbonyl- oder Dimethylaminocarbonylgruppe oder (iii) $R_1$ eine 2-Methylthio-prop-2-ylgruppe und $R_2$ ein Wasserstoffatom bedeuten.

In der amerikanischen Patentschrift Nr. 4 058 549 wird als Beispiel das O-[N-Methyl-N-(2-chlormethyl-2-propansulfenyl)-carbamoyl]-oxim genannt. Dieser Verbindung gegenüber haben die vorliegenden N-(2-Isobutyronitrilsulfenyl)-N-methyl-oximcarbamate eine bessere systemische, insektizide Wirkung.

Die für $R_1$ in Frage kommenden Alkylthiogruppen sind: Methylthio, Äthylthio, Propylthio und Isopropylthio.

Wegen ihrer Wirkung bevorzugt sind Verbindungen der Formel I, worin (i) $R_1$ eine Methylthio-, Äthylthio- oder Allylthiogruppe und $R_2$ eine Methylgruppe oder (ii) $R_1$ eine Methylthiogruppe und $R_2$ eine Dimethylaminocarbonylgruppe oder (iii) $R_1$ eine 2-Methylthio-prop-2-ylgruppe und $R_2$ ein Wasserstoffatom bedeuten.

Die Verbindungen der Formel I werden analog zu bekannten Verfahren hergestellt, indem man z.B.

a) eine Verbindung der Formel II

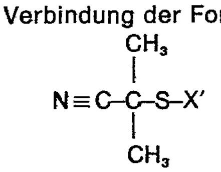
(II)

in Gegenwart einer Base mit einer Verbindung der Formel III

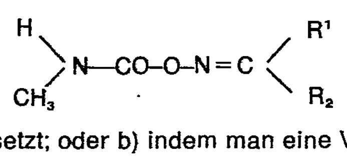
(III)

umsetzt; oder b) indem man eine Verbindung der Formel IV

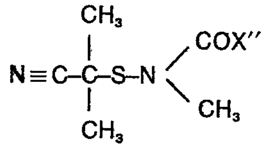
(IV)

in Gegenwart einer Base mit einer Verbindung der Formel V

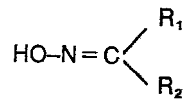
(V)

umsetzt; wobei in den Formeln II bis V $R_1$ und $R_2$ die für Formel I bereits angegebenen Bedeutungen haben und X' für ein Halogenatom, insbesondere ein Chloratom, und X'' für ein Halogenatom, insbesondere ein Fluoratom stehen.

Die Verfahren (a) und (b) werden bei einer Reaktionstemperatur zwischen −50 °C und +130 °C, vorzugsweise zwischen −10 °C und 100 °C, bei normalem oder leicht erhöhtem Druck und in Gegenwart eines gegenüber den Reaktionsteilnehmern inerten Lösungs- oder Verdünnungsmittels vorgenommen.

Als für diese Verfahren geeignete Basen kommen insbesondere tertiäre Amine, wie Trialkylamine, Pyridine und Dialkylaniline, ferner Hydroxide, Oxide, Carbonate und Bicarbonate von Alkali- und Erdalkalimetallen sowie Alkalimetallalkoholate wie z.B. Kalium-tert.-butylat und Natrium-methylat in Betracht.

Als Lösungs- oder Verdünnungsmittel eignen sich z.B. Äther und ätherartige Verbindungen wie Diäthyläther, Di-iso-propyläther, Dioxan, Tetrahydrofuran; aliphatische und aromatische Kohlenwasserstoffe, insbesondere Benzol, Toluol, Xylole; und Ketone wie Aceton, Methyläthylketon und Cyclohexanon.

Die in den vorstehend aufgeführten Verfahren verwendeten Ausgangsstoffe der Formel II, III und V sind bekannt bzw. können analog bekannten Methoden hergestellt werden. Ausgangsstoffe der Formel II und Verfahren zu deren Herstellung sind in der amerikanischen Patentschrift Nr. 4 058 549 beschrieben.

Die Ausgangsstoffe der Formel IV können aus bekannten Vorläufern leicht erhalten werden, indem man z.B. eine Verbindung der bereits definierten Formel II in Gegenwart einer Base mit einer Verbindung der Formel VI

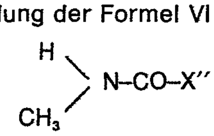
(VI)

umsetzt, worin X'' die bereits angegebene Bedeutung hat.

Das Verfahren zur Herstellung der Ausgangsstoffe der Formel IV wird zweckmässig in Gegenwart eines gegenüber den Reaktionsteilnehmern inerten Lösungs- oder Verdünnungsmittels, bei einer Reaktionstemperatur von −50 °C bis +130 °C, unter normalem Druck durchgeführt. Als für dieses Verfahren geeignete Basen und Lösungsmittel kommen die für die oben aufgeführten Verfahren (a) und (b) bereits erwähnten Substanzen in Betracht.

Die Verbindungen der Formel I eignen sich zur Bekämpfung von verschiedenartigen Schädlingen an Tieren und Pflanzen.

Insbesondere eignen sich die Verbindungen der Formel I zur Bekämpfung aller Entwicklungsstadien von Insekten, phytopathogenen Milben sowie von Zecken, z. B. der Ordnungen Lepidoptera, Coleoptera, Homoptera, Heteroptera, Diptera, Acarina, Thysanoptera, Orthoptera, Anoplura, Siphonaptera, Mallophaga, Thysanura, Isoptera, Psocoptera und Hymenoptera.

Darüber hinaus besitzen die Verbindungen der Formel I eine wertvolle Wirkung gegen pflanzenparasitäre Nematoden sowie gegen Akarinen, insbesondere ektoparasitäre Akarinen (Milben und Zecken) z. B. der Familien Ixodidae, Argasidae und Dermanyssidae.

Vor allem eignen sich Verbindungen der Formel I zur Bekämpfung von pflanzenschädigenden Insekten, insbesondere pflanzenschädigenden Frassinsekten, in Zier- und Nutzpflanzen, insbesondere in Baumwollkulturen (z. B. Spodoptera littoralis und Heliothis virescens), Gemüsekulturen (z. B. Leptinotarsa decemlineata und Myzus persicae) und Reiskulturen (z. B. Reiszikaden).

Wirkstoffe der Formel I zeigen auch eine sehr günstige Wirkung gegen Fliegen, wie z. B. Musca domestica und Mückenlarven. Daneben zeichnen sich die Verbindungen der Formel I durch eine breite ovizide und ovilarvizide Wirkung aus.

Die Verbindungen der Formel I können in der Regel entweder in unveränderter Form oder zusammen mit den in der Formulierungstechnik üblichen Hilfsmitteln als Formulierungen, wie z. B. Emulsionskonzentrate, Suspensionskonzentrate, direkt versprühbare oder verdünnbare Lösungen, verdünnte Emulsionen, Spritzpulver, lösliche Pulver, Stäubemittel, Granulate, auch Feinstverkapselungen in polymeren Stoffen u. dgl., in bekannter Weise eingesetzt werden. Die Anwendungsformen wie Versprühen, Vernebeln, Verstäuben, Verstreuen oder Giessen richten sich ganz nach den Verwendungszwecken. Dabei ist zu beachten, dass durch die Applikationsmethode sowie die Art und Menge der für die Zubereitung der Formulierung verwendeten Hilfsmaterialien das biologische Verhalten des Wirkstoffes der Formel I nicht wesentlich beeinflusst wird.

Die Formulierungen werden in bekannter Weise hergestellt, z. B. durch inniges Vermischen und/oder Vermahlen der Wirkstoffe mit Streckmitteln, also mit Lösungsmitteln, festen Trägerstoffen, und gegebenenfalls unter Verwendung oberflächenaktiver Substanzen (Tenside). Als Lösungsmittel können in Frage kommen: Aromatische Kohlenwasserstoffe, bevorzugt die Fraktionen $C_8$ bis $C_{12}$, d. h. Xylolgemische bis hin zu substituierten Naphthalinen, aliphatische Kohlenwasserstoffe wie Cyclohexan oder Paraffine, Alkohole und Glykole sowie deren Äther und Ester, stark polare Lösungsmittel wie Dimethylsulfoxid oder Dimethylformamid sowie Wasser. Als feste Trägerstoffe, z. B. für Stäubemittel und dispergierbare Pulver, werden meist natürliche Gesteinsmehle verwendet. Chemisch kommen hier vor allem Calcit, Talkum, Kaolinit, Montmorillonit oder Attapulgit in Frage. Zur Verbesserung der physikalischen Eigenschaften können auch hochdisperse Kieselsäuren oder hochdisperse saugfähige Polymere zugesetzt werden. Als gekörnte Granulatträger kommen poröse Typen wie z. B. Bims, Ziegelbruch, Sepiolit und Bentonit, als nichtsorptive Träger Materialien wie z. B. Calcit oder Sand in Frage. Darüber hinaus kann eine Vielzahl von vorgranulierten Materialien anorganischer oder organischer Natur, vom Dolomit bis hin zu zerkleinerten Nussschalen oder Maiskolben verwendet werden.

Als oberflächenaktive Substanzen kommen je nach der Polarität des zu formulierenden Wirkstoffes der Formel I nichtionogene, kation- und/oder anionaktive Tenside mit guten Emulgier-, Dispergier- und Netzeigenschaften in Betracht.

Geeignete anionaktive Tenside sind beispielsweise quaternäre Ammoniumverbindungen, wie z. B. Cetyltrimethyl-ammonium-bromid. Geeignete anionaktive Tenside sind z. B. Seifen, Salze von aliphatischen Monoestern der Schwefelsäure, wie z. B. Natrium-laurylsulfat, Salze von sulfonierten aromatischen Verbindungen, wie z. B. Natriumdodecylbenzolsulfonat, Natrium-, Calcium- und Ammoniumligninsulfonat, Butylnaphthalinsulfonat und ein Gemisch aus den Natriumsalzen von Diisopropyl- und Triisopropylnaphthalinsulfonat. Geeignete nichtionogene Tenside sind beispielsweise die Kondensationsprodukte von Äthylenoxid mit Fettalkoholen, wie z. B. Oleyalkohol oder Cetylalkohol, oder mit Alkylphenolen, wie z. B. Octylphenol, Nonylphenol und Octylkresol. Andere nichtionische Mittel sind die Teilester, die sich von langkettigen Fettsäuren und Hexitanhydriden ableiten, die Kondensationsprodukte dieser Teilester mit Äthylenoxid und die Lecithine.

Die in der Formulierungstechnik gebräuchlichen nichtionogenen, anion- und kationaktiven Tenside sind u. a. in folgenden Publikationen beschrieben:

«McCutcheon's Detergents and Emulsifiers Annual» MC Publishing Corp., Ringewood, New Jersey, Sisely and Wood, «Encyclopedia of Surface Active Agents», Chemical Publishing Co., Inc., New York.

Die Formulierungen enthalten in der Regel 0,1 bis 99%, insbesondere 0,1 bis 95% Wirkstoff der Formel I und 0 bis 25% eines Tensides sowie 1 bis 99,9% eines festen oder flüssigen Zusatzstoffes.

Die Formulierungen können auch Mittel wie Stabilisatoren, Entschäumer, Viskositätsregulatoren, Bindemittel, Haftmittel sowie auch Düngerzusätze zur Erzeugung spezieller Effekte enthalten.

Die Wirkstoffe der Formel I können beispielsweise wie folgt formuliert werden (Angaben in Gewichtsprozenten):

Formulierungsbeispiele für flüssige Wirkstoffe der Formel I

Emulsions-Konzentrate

| | | |
|---|---|---|
| a) | Wirkstoff | 20% |
| | Ca-Dodecylbenzolsulfonat | 5% |
| | Ricinusöl-polyglykoläther (36 Mol AeO) | 5% |
| | Xylolgemisch | 70% |

| | | |
|---|---|---|
| b) | Wirkstoff | 40% |
| | Ca-Dodecylbenzolsulfonat | 8% |
| | Tributylphenol-polyglykoläther (30 Mol AeO) | 12% |
| | Cyclohexanon | 15% |
| | Xylolgemisch | 25% |
| c) | Wirkstoff | 50% |
| | Tributylphenol-Polyglykoläther | 4,2% |
| | Ca-Dodecylbenzolsulfonat | 5,8% |
| | Cyclohexanon | 20% |
| | Xylolgemisch | 20% |

Aus solchen Konzentraten können durch Verdünnen mit Wasser Emulsionen jeder gewünschten Konzentration hergestellt werden.

Lösungen

| | | |
|---|---|---|
| a) | Wirkstoff | 80% |
| | Äthylenglykol-monomethyläther | 20% |
| b) | Wirkstoff | 10% |
| | Polyäthylenglykol 400 | 70% |
| | N-Methyl-2-pyrrolidon | 20% |
| c) | Wirkstoff | 5% |
| | Epoxydiertes Pflanzenöl | 1% |
| | Benzin (Siedegrenzen 160–190 °C) | 94% |
| d) | Wirkstoff | 95% |
| | Epoxydiertes Pflanzenöl | 5% |

Diese Lösungen sind zur Anwendung in Form kleinster Tropfen geeignet.

Granulate

| | | |
|---|---|---|
| a) | Wirkstoff | 5% |
| | Kaolin 0,2–0,8 mm | 94% |
| | Hochdisperse Kieselsäure | 1% |
| b) | Wirkstoff | 10% |
| | Attapulgit 0,3–1 mm | 90% |

Der Wirkstoff wird in Methylenchlorid gelöst, auf den Träger aufgesprüht und das Lösungsmittel anschliessend im Vakuum abgedampft.

Stäubemittel

| | | |
|---|---|---|
| a) | Wirkstoff | 2% |
| | Hochdisperse Kieselsäure | 1% |
| | Talkum | 97% |
| b) | Wirkstoff | 5% |
| | Hochdisperse Kieselsäure | 5% |
| | Kaolin feinteilig | 90% |

Durch inniges Vermischen der Trägerstoffe mit dem Wirkstoff erhält man gebrauchsfertige Stäubemittel.

Formulierungsbeispiele für feste Wirkstoffe der Formel I

Spritzpulver

| | | |
|---|---|---|
| a) | Wirkstoff | 20% |
| | Na-Ligninsulfonat | 5% |
| | Na-Laurylsulfat | 3% |
| | Kieselsäure | 5% |
| | Kaolin | 67% |
| b) | Wirkstoff | 60% |
| | Na-Ligninsulfonat | 5% |
| | Na-Diisobutylnaphthalinsulfonat | 6% |
| | Octylphenolpolyglykoläther (7–8 Mol AeO) | 2% |
| | Hochdisperse Kieselsäure | 27% |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

Emulsions-Konzentrat

| | |
|---|---|
| Wirkstoff | 10% |
| Octylphenolpolyglykoläther (4–5 Mol AeO) | 3% |
| Ca-Dodecylbenzolsulfonat | 3% |
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

Stäubemittel

| | | |
|---|---|---|
| a) | Wirkstoff | 5% |
| | Talkum | 95% |
| b) | Wirkstoff | 8% |
| | Kaolin feinteilig | 92% |

Man erhält anwendungsfertige Stäubemittel, indem der Wirkstoff mit den Trägern vermischt und auf einer geeigneten Mühle vermahlen wird.

Extruder Granulat

| | |
|---|---|
| Wirkstoff | 10% |
| Na-Ligninsulfonat | 2% |
| Carboxymethylcellulose | 1% |
| Kaolin feinteilig | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

Umhüllungs-Granulat

| | |
|---|---|
| Wirkstoff | 3% |
| Polyäthylenglykol | 3% |
| Kaolin (0,3–0,8 mm) | 94% |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

Suspensions-Konzentrat

| | |
|---|---|
| Wirkstoff | 40% |
| Äthylenglykol | 10% |
| Nonylphenolpolyglykoläther (15 Mol AeO) | 6% |
| Na-Ligninsulfonat | 10% |
| Carboxymethylcellulose | 1% |
| Formalin (37%ige Formaldehyd-Lösung) | 0,2% |
| Silikonöl in Form einer 75%igen Emulsion | 0,8% |
| Leitungswasser | 32% |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 1

a) Herstellung von (2-Fluorcarbonyl-4-cyano-4-methyl-2-aza-3-sulfapentan (Ausgangsstoff).

Zu einer Lösung von 11,7 g wasserfreier Fluorwasserstoffsäure in 100 ml Toluol werden bei einer Temperatur von −50 °C unter Rühren 34,8 ml Methylisocyanat zugegeben. Das Reaktionsgemisch wird während 2 Stunden nachgerührt. Zu der auf diese Weise erhaltenen Lösung wurden 79,4 g Isobutyronitril-2-sulfenylchlorid zugegeben und anschliessend unter Rühren bei einer Temperatur von −50° bis −20 °C 80,85 ml Triäthylamin zugetropft. Danach wird das Reaktionsgemisch während 2 Stunden bei −20 °C, 1 Stunde bei Raumtemperatur und zuletzt 1 Stunde bei 50 °C gerührt. Nach dem Abnutschen des entstandenen Triäthylaminhydrochlorides wird das Filtrat am Rotationsdampfer eingeengt. Nach dem Abdestillieren des Rohproduktes am Hochvakuum erhält man das (2-Fluorcarbonyl-4-cyano-4-methyl)-2-aza-3-sulfapentan der Formel

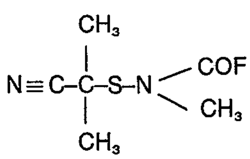

als eine gelbe Flüssigkeit (Kp.: 78–80°C/0, 25 m.b.)

b) Herstellung von 2-Methylthio-6,8-dimethyl-3,6-diaza-4-oxa-7-sulfa-8-cyano-nonen(2)-on(5) (Endprodukt).

Zu einer Lösung von 4,2 g 1-Methylthioacetaldoxim in 100 ml Toluol und 20 ml Chloroform werden unter Rühren 6,9 ml Triäthylamin und anschliessend bei einer Temperatur von max. 30 °C 7,05 g (2-Fluorcarbonyl-4-cyano-4-methyl)-2-aza-3-sulfapentan zugetropft. Das erhaltene Reaktionsgemisch wird während 16 Stunden bei Raumtemperatur und anschliessend während 2 Stunden bei 40–50 °C nachgerührt. Nach dem Abnutschen wird das Filtrat mit Wasser gewaschen, über $Na_2SO_4$ getrocknet und die entstandene organische Phase eingeengt. Auf diese Weise erhält man das 2-Methylthio-6,8-dimethyl-3,6-diaza-4-oxa-7-sulfa-8-cyano-nonen-(2)-on(5) der Formel

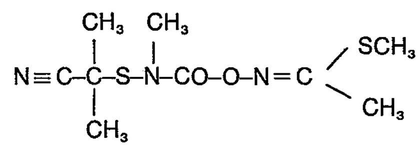

(Verbindung Nr. 1) als eine gelbe Flüssigkeit $n^{21}_D$ : 1,5345.

Die nachfolgenden Verbindungen können analog zu dem vorstehend beschriebenen Herstellungsverfahren hergestellt werden:

2) 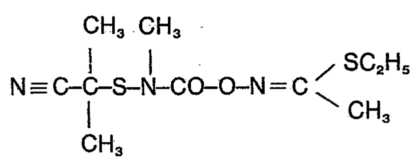 Smp: 43 °C

3) 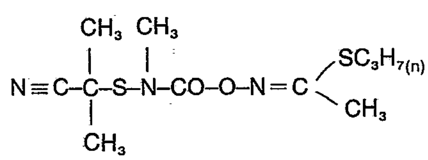 Smp: 55–58 °C

4) 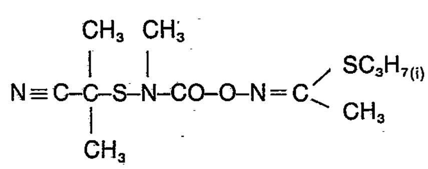 Smp: 81–82 °C

5) 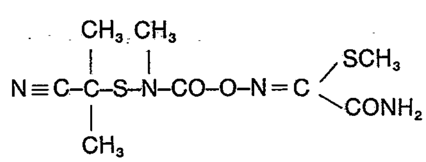

6) 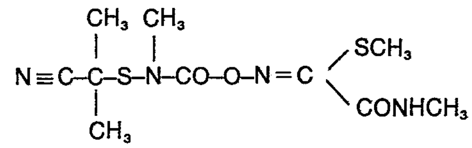

7) 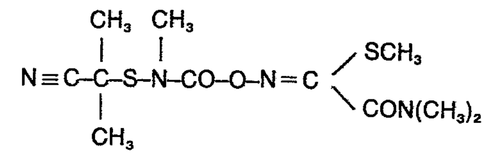 Smp: 97 °C

8) 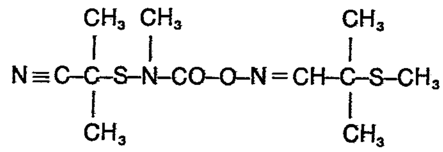 $n_D^{21}$: 1,5081

9) 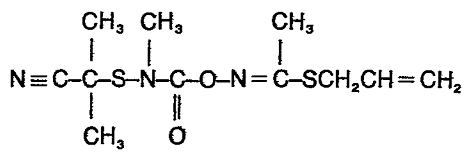 $n_D^{21}$: 1,5372

Beispiel 2
Insektizide Frassgift-Wirkung:
Spodoptera littoralis, Dysdercus fasciatus
und Heliothis virescens

Baumwollpflanzen wurden mit einer Versuchslösung, enthaltend 50, 100, 200 oder 400 ppm der zu prüfenden Verbindung, besprüht.

Nach dem Antrocknen des Belages wurden die Pflanzen je mit Larven der Spezies Spodoptera littoralis (L3-Stadium) Dysdercus fasciatus (L4) oder Heliothis virescens (L3) besetzt. Man verwendete pro Versuchsverbindung und pro Test-Spezies zwei Pflanzen, und eine Auswertung der erzielten Abtötungsrate erfolgte nach 2, 4, 24 und 48 Stunden. Der Versuch wurde bei 24 °C und 60% relativer Luftfeuchtigkeit durchgeführt.

Innerhalb der oben angegebenen Konzentrationsgrenzen zeigten Verbindungen gemäss dem Herstellungsbeispiel 1 100%ige Wirkung gegen Larven der Spezies Spodoptera littoralis, Dysdercus fasciatus und Heliothis virescens.

Beispiel 3
Insektizide Kontakt-Wirkung: Myzus persicae

In Wasser angezogene Pflanzen (Vicia faba) wurden vor dem Versuchsbeginn je mit ca. 200 Individuen der Spezies Myzus persicae besiedelt. Die so behandelten Pflanzen wurden 3 Tage später mit einer Lösung, enthaltend 10 oder 1 ppm der zu prüfenden Verbindung, aus 30 cm Distanz bis zur Tropfnässe besprüht. Man verwendete pro Test-Verbindung und pro Konzentration zwei Pflanzen, und eine Auswertung der erzielten Abtötungsrate erfolgte nach weiteren 24 Stunden.

Innerhalb der oben angegebenen Konzentrationsgrenzen zeigten Verbindungen gemäss Beispiel 1 eine 100%ige Wirkung gegen Insekten der Spezies Myzus persicae.

Beispiel 4
Insektizide systemische Wirkung:
Aphis craccivora

Bewurzelte Bohnenpflanzen wurden in Töpfe, welche 600 ccm Erde enthalten, verpflanzt. Anschliessend wurden 50 ml einer Versuchslösung, 25 ppm, 5 ppm bzw. 1 ppm der zu prüfenden Verbindung direkt auf die Erde gegossen.

Nach 24 Stunden wurden auf die oberirdischen Pflanzenteile Blattläuse (Aphis craccivora) gesetzt und die Pflanzen mit einem unten zugeschnürten Plastikzylinder überstülpt, um die Läuse vor einer eventuellen Kontakt- oder Gaswirkung der Testsubstanz zu schützen.

Die Auswertung der erzielten Abtötung erfolgte 24 und 48 Stunden nach Versuchsbeginn. Pro Konzentrationsdosis Testsubstanz wurden zwei Pflanzen, je eine in einem separaten Topf, verwendet. Der Versuch wurde bei 25 °C und 70% relativer Luftfeuchtigkeit durchgeführt.

Innerhalb der oben angegebenen Konzentrationsgrenzen zeigten Verbindungen gemäss Beispiel 1 eine 100%ige systemische Wirkung gegen Insekten der Spezies Aphis craccivora.

**Patentansprüche**

1. N-(2-Isobutyronitrilsulfenyl)-N-methyl-oximcarbamat der Formel I

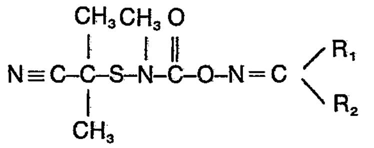

(I),

worin (i) $R_1$ eine $C_1$–$C_3$-Alkylthio- oder Allylthiogruppe und $R_2$ eine Methylgruppe oder (ii) $R_1$ eine Methylthiogruppe und $R_2$ eine Aminocarbonyl-, Methylaminocarbonyl- oder Dimethylaminocarbonylgruppe oder (iii) $R_1$ eine 2-Methylthio-prop-2-yl-gruppe und $R_2$ ein Wasserstoffatom bedeuten.

2. Verbindung gemäss Anspruch 1, worin (i) $R_1$ eine Methylthio-, Äthylthio- oder Allylthio- und $R_2$ eine Methylgruppe oder (ii) $R_1$ eine Methylthiogruppe und $R_2$ eine Dimethylaminocarbonylgruppe oder (iii) $R_1$ eine 2-Methylthio-prop-2-yl-gruppe und $R_2$ ein Wasserstoffatom bedeuten.

3. Verbindung gemäss Anspruch 2 der Formel

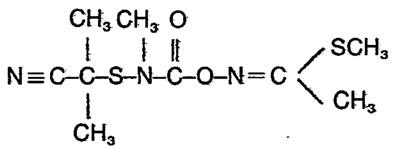

.

4. Verbindung gemäss Anspruch 2 der Formel

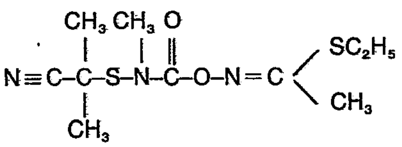

.

5. Verbindung gemäss Anspruch 2 der Formel

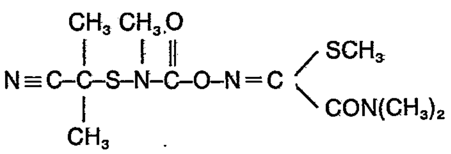

.

6. Verbindung gemäss Anspruch 2 der Formel

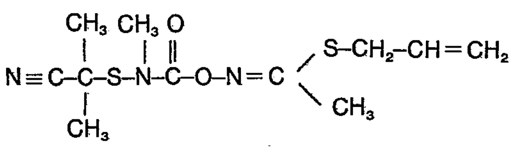

.

7. Verfahren zur Herstellung von im Patentanspruch 1 definierten Verbindungen der Formel I, dadurch gekennzeichnet, dass man

a) eine Verbindung der Formel II

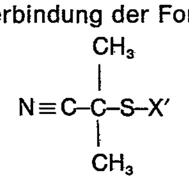

(II)

in Gegenwart einer Base mit einer Verbindung der Formel III

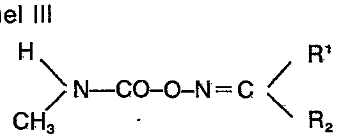

(III)

umsetzt oder dass man b) eine Verbindung der Formel IV

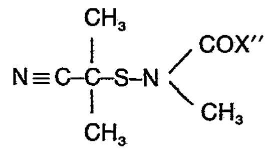

(IV)

in Gegenwart einer Base mit einer Verbindung der Formel V

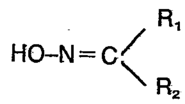

(V)

umsetzt; wobei in den Formeln II bis V $R_1$ und $R_2$ die im Anspruch 1 bereits angegebenen Bedeutungen haben und X′ und X″ je ein Halogenatom bedeuten.

8. Schädlingsbekämpfungsmittel, welches als aktive Komponente 0,1 bis 99% einer Verbindung gemäss Anspruch 1 und 0 bis 25% eines Tensides sowie 1 bis 99,9% eines festen oder flüssigen Zusatzstoffes enthält.

9. Verwendung einer Verbindung gemäss Anspruch 1 zur Bekämpfung von Schädlingen an Tieren und Pflanzen.

10. Verwendung gemäss Anspruch 9 zur Bekämpfung von Insekten und Vertretern der Ordnung Akarina.

**Claims**

1. N-(2-Isobutyronitrilesulfenyl)-N-methyl-oxime carbamate of the formula I

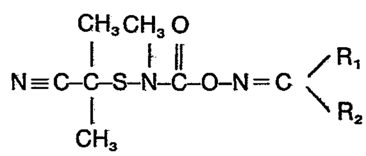

(I),

wherein (i) $R_1$ is a $C_1$–$C_3$-alkylthio group or allylthio group and $R_2$ is a methyl group; or (ii) $R_1$ is a methylthio group and $R_2$ is an aminocarbonyl, methylaminocarbonyl or dimethylaminocarbonyl group; or (iii) $R_1$ is a 2-methylthio-prop-2-yl group and $R_2$ is a hydrogen atom.

2. Compound according to Claim 1, wherein (i) $R_1$ is a methylthio, ethylthio or allylthio group and $R_2$ is a methyl group; or (ii) $R_1$ is a methylthio group and $R_2$ is a dimethylaminocarbonyl group; or (iii) $R_1$ is a 2-methylthio-prop-2-yl group and $R_2$ is a hydrogen atom.

3. Compound according to Claim 2 of the formula

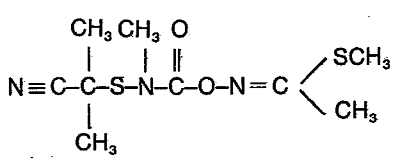

.

4. Compound according to Claim 2 of the formula

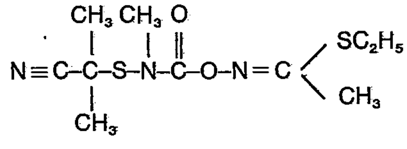

.

5. Compound according to Claim 2 of the formula

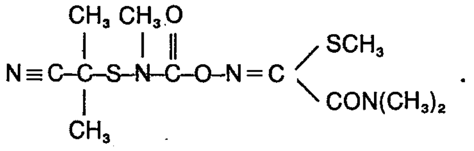 .

6. Compound according to Claim 2 of the formula

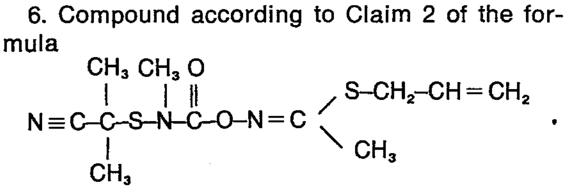 .

7. A process for producing a compound of the formula I defined in Claim 1, which process comprises

a) reacting a compound of the formula II

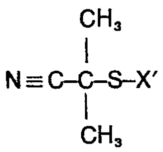 (II) ,

in the presence of a base, with a compound of the formula III

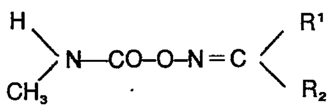 (III) ,

or

b) reacting a compound of the formula IV

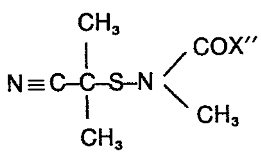 (IV) ,

in the presence of a base, with a compound of the formula V

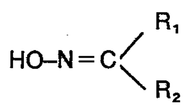 (V) ,

$R_1$ and $R_2$ in the formulae II to V having the meanings already defined in Claim 1, and X′ and X″ each being a halogen atom.

8. A pesticidal composition which contains as active ingredient 0.1 to 99% of a compound according to Claim 1, and 0 to 25% of a tenside as well as 1 to 99.9% of a solid or liquid additive.

9. Use of a compound according to Claim 1 for combating pests on animals and plants.

10. Use according to Claim 9 for combating insects, and members of the order Acarina.

**Revendications**

1. N-(2-isobutyronitrilosulfényl)-N-méthylcarbamate d'oxime de formule (I):

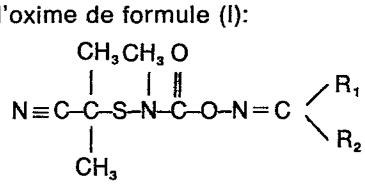 (I)

dans laquelle (i) $R_1$ représente un groupe alkylthio en $C_1$–$C_3$ ou allylthio et $R_2$ représente un groupe méthyle ou bien (ii) $R_1$ représente un groupe méthylthio et $R_2$ un groupe aminocarbonyle, méthylaminocarbonyle ou diméthylaminocarbonyle, ou bien (iii) $R_1$ représente un groupe 2-méthylthio-prop-2-yle et $R_2$ un atome d'hydrogène.

2. Composé selon la revendication 1, dans lequel (i) $R_1$ représente un groupe méthylthio, éthylthio ou allylthio et $R_2$ représente un groupe méthyle ou bien (ii) $R_1$ représente un groupe méthylthio et $R_2$ un groupe diméthylaminocarbonyle, ou bien (iii) $R_1$ représente un groupe 2-méthylthio-propa-2-yle et $R_2$ un atome d'hydrogène.

3. Composé selon la revendication 2, de formule:

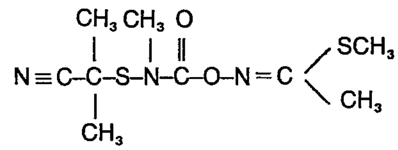 .

4. Composé selon la revendication 2, de formule:

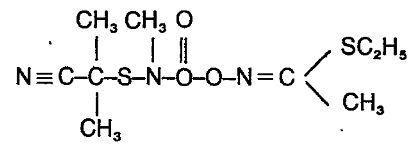 .

5. Composé selon la revendication 2, de formule:

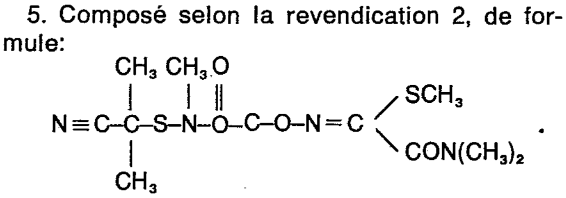 .

6. Composé selon la revendication 2, de formule:

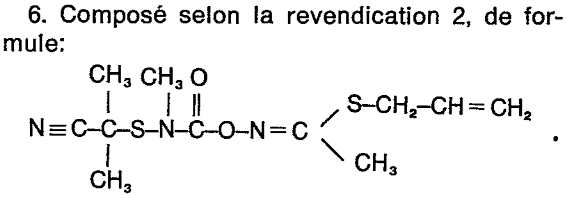 .

7. Procédé de préparation des composés de formule (I) définis dans la revendication 1, caractérisé en ce que:

a) on fait réagir un composé de formule (II):

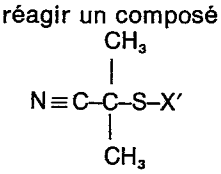 (II)

en présence d'une base avec un composé de formule (III):

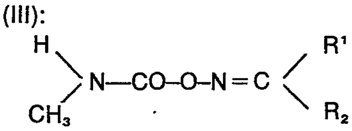 (III)

ou bien b) on fait réagir un composé de formule (IV):

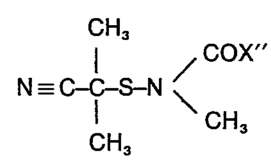 (IV)

en présence d'une base avec un composé de formule (V):

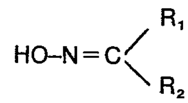 (V)

$R_1$ et $R_2$ ayant dans les formules (II) à (V) les significations déjà indiquées dans la revendication 1, et X′ et X″ représentant chacun un atome d'halogène.

8. Produit pesticide contenant en tant que composant actif de 0,1 à 99% d'un composé selon la revendication 1 et de 0 à 25% d'un agent tensioactif ainsi que 1 à 99,9% d'un additif solide ou liquide.

9. Utilisation d'un composé selon la revendication 1 pour la lutte contre les parasites des animaux et des végétaux.

10. Utilisation selon la revendication 9, pour la lutte contre les insectes et les représentants de l'ordre des acariens.